# EUROPÄISCHE PATENTANMELDUNG

(11) **EP 0 924 843 A1**
(43) Veröffentlichungstag der Anmeldung: **23.06.1999**
(21) Anmeldenummer: 97122230.2
(22) Anmeldetag: 17.12.1997
(51) Int. Cl.: H02K 37/12, B65H 54/28

(54) **Vorrichtung zum Aufwickeln eines Fadens auf eine Spule**

(71) Anmelder: SSM SCHÄRER SCHWEITER METTLER AG, CH-8812 Horgen (CH)
(72) Erfinder: Herzog, Peter, 6440 Brunnen (CH)
(74) Vertreter: Dittrich, Horst, Dr.

(57) **Zusammenfassung**

Die Vorrichtung enthält einen von einem Schrittmotor (7) oszillierend antreibbaren Fadenführer. Der Schrittmotor (7) weist mindestens zwei Rotoranordnungen (19) auf, von denen jede ein auf der Motorachse (8) befestigtes Drehteil (20) enthält. Jedem Drehteil (20) sind in einem ortsfesten Gehäuse (27) angeordnete magnetische Elementarkreise (25) und elektrische Spulen (26) zugeordnet.

Die mindestens zwei Rotoranordnungen (19) sind vorzugsweise identisch ausgebildet und in einem gemeinsamen Gehäuse (27) angeordnet.

## Beschreibung

Die vorliegende Erfindung betrifft eine Vorrichtung zum Aufwickeln eines Fadens auf eine Spule, mit einem Fadenführer, welcher von einem Schrittmotor oszillierend antreibbar ist und beim Aufwickeln des Fadens eine Changierbewegung entlang der Spulenachse ausführt.

Bei den Aufwickelvorrichtungen dieser Art werden im wesentlichen zwei Arten von Fadenführern verwendet, solche, die von einem parallel zur Spulenachse orientierten Antriebsmittel, wie einem Riemen, einem Seil oder einer Saite getragen und angetrieben, und solche, die finger- oder zeigerartig ausgebildet und aufeiner senkrecht zur Spulenachse angeordneten Achse gelagert und um diese Achse antreibbar sind. Eine Aufwickelvorrichtung mit einem Fadenführer der ersten Art ist in der europäischen Patentanmeldung Nr. 97 115 596.5 beschrieben, eine solche mit einem Fadenführer der zweiten Art in der europäischen Patentanmeldung Nr. 96 117 256.6.

Beiden bekannten Aufwickelvorrichtungen ist gemeinsam, dass der den Fadenführer antreibende Schrittmotor in der Art des in der CH-A-653 189 beschriebenen Motors ausgebildet ist. Obwohl sich dieser Schrittmotor im praktischen Einsatz bestens bewährt hat, wäre zur Erzielung einer höheren Wickelgeschwindigkeit eine höhere Motorleistung wünschenswert, was aber bisher daran gescheitert ist, dass jede Erhöhung der Motorleistung mit den bekannten klassischen Massnahmen mit einer entsprechenden, das Beschleunigungsvermögen des Motors limitierenden, Vergrösserung von dessen Trägheitsmoment verbunden ist.

Durch die Erfindung soll nun eine Aufwickelvorrichtung angegeben werden, die eine höhere Wickelgeschwindigkeit als bisher ermöglicht.

Diese Aufgabe wird erfindungsgemäss dadurch gelöst, dass der Schrittmotor mindestens zwei Rotoranordnungen aufweist, von denen jede ein auf der Motorachse befestigtes Drehteil enthält, welchem in einem ortsfesten Gehäuse angeordnete magnetische Elementarkreise und elektrische Spulen zugeordnet sind.

Die erfindungsgemässe Ausrüstung des Schrittmotors mit mindestens zwei Rotoranordnungen führt zu einer merklichen Verbesserung des Verhältnisses von Drehmoment zu Trägheitsmoment.

Bei einer ersten bevorzugten Ausführungsform sind die mindestens zwei Rotoranordnungen in einem gemeinsamen Gehäuse angeordnet und bei einem zweiten bevorzugten Ausführungsbeispiel sind die magnetischen Elementarkreise und die Spulen so ausgebildet und angeordnet, dass bei jedem Elementarkreis zwei Eisenkerne von Spulen umwickelt sind. Daraus ergibt sich der zusätzliche Vorteil, dass die Flusslinien in Eisen verkürzt werden, wodurch das Drehmoment erhöht wird.

Im folgenden wird die Erfindung anhand eines in den Zeichnungen dargestellten Ausführungsbeispiels näher erläutert; es zeigt:
- Fig. 1: eine schematische Darstellung einer Spulstelle einer Spulmaschine, in Blickrichtung parallel zur Spulenachse;
- Fig. 2: eine Ansicht in Richtung des Pfeiles II von Figur 1; und
- Fig. 3: ein Detail von Fig. 1 in schematischer Darstellung.

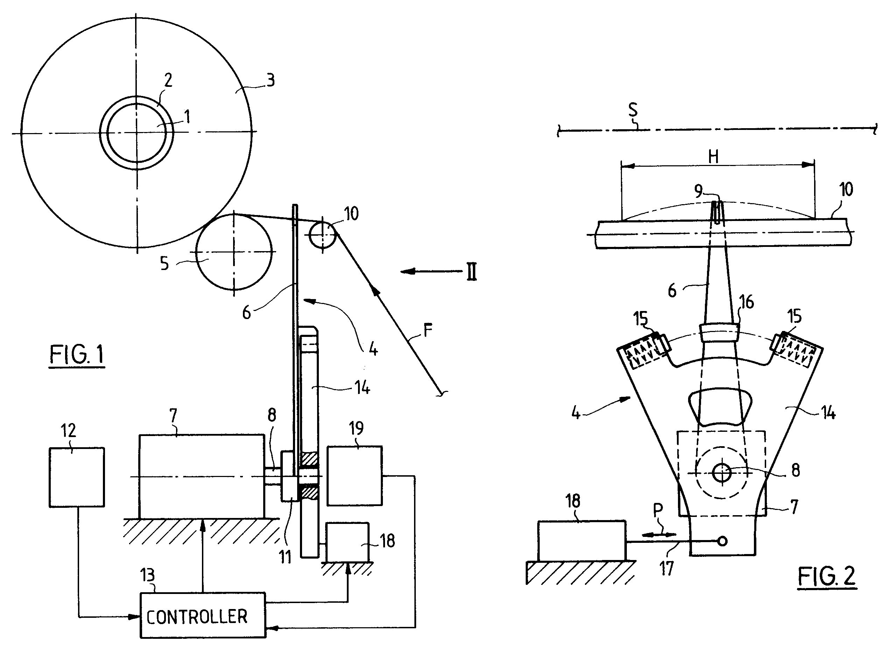

Die in den Figuren 1 und 2 dargestellte Spulstelle besteht im wesentlichen aus einer motorisch antreibbaren Spindel 1 zur Aufnahme einer Spulenhülse 2, auf die eine Spule 3, beispielsweise eine Kreuzspule, aufgewickelt wird, und aus einer Einrichtung 4 zur Verlegung eines Fadens F, der von einer nicht dargestellten Vorratsspule abgezogen wird. Spindel 1, Spulenhülse 2 und Spule 3 sind in Fig. 2 nicht eingezeichnet und durch eine strichpunktierte, die Achse der Spule 3 symbolisierende Linie S angedeutet. Die Spule 3 liegt längs einer Mantellinie auf einer frei drehbaren Walze 5 auf, die auf einem geeigneten Trägerteil der Spulmaschine montiert ist.

Die Fadenverlegung 4, die zur Herstellung der gewünschten Wicklung dient, enthält als wesentlichstes Element einen finger- oder zeigerförmigen Fadenführer 6, der auf der Achse 8 eines Motors 7 montiert ist. Die Motorachse 8 ist senkrecht zur Spulenachse S und senkrecht zur Zeichnungsebene orientiert, so dass der Fadenführer 6 im Betrieb der Spulstelle eine oszillierende Bewegung in der Ebene senkrecht zur Achse 8 vollführt.

Der Fadenführer 6 ist an seinem freien Ende mit einem Längsschlitz 9 versehen, in dem der Faden F geführt ist. In Laufrichtung des Fadens F ist vor dem Fadenführer 6 eine Führungsschiene 10 angeordnet, die vom Faden F teilweise umschlungen ist. Der Faden F läuft darstellungsgemäss von der nicht dargestellten Vorratsspule zur Führungsschiene 10 und von dieser durch den Längsschlitz 9 des Fadenführers 6 zur Walze 5. Die gegenseitige Lage von Fadenführer 6 und Führungsschiene 10 und die Länge des Längsschlitzes 9 sind so gewählt, dass der Faden F bei der Bewegung des Fadenführers 6 den Grund des Längsschlitzes 9 nicht berührt. Dadurch ist gewährleistet, dass der Fadenverlauf von der Führungsschiene 10 bis zur Spule 3 immer die gleiche, wegen der Walze 5 auch vom Durchmesser der Spule 3 unabhängige, Geometrie aufweist.

Der Fadenführer 6 ist durch ein an einer Nabe 11 befestigtes finger- oder zeigerartiges Organ gebildet. Die Habe 11 ist auf der Motorachse 8 fixiert. Bei Antrieb des Motors 7 wird je nach dessen Rotationsrichtung der Fadenführer 6 in die eine oder andere Richtung geschwenkt. Der maximale Hub dieser Schwenkbewegung ist in Fig. 2 mit dem Bezugszeichen H bezeichnet. Wegen der Führungsschiene 10 wird der Faden F bei der Schwenkbewegung des Fadenführers 6 immer parallel zur Spulenachse S bewegt, und die sogenannte Schlepplänge, das ist die Fadenlänge vom Fadenführer 6 bis zur Spule 3, ist immer gleich gross. Die Trägheit des Motors 7 ist so an die Trägheit der aus Nabe 11, Fadenführer 6 und Faden F gebildeten Last angeglichen, dass ein idealer Wirkungsgrad resultiert.

Dem Motor 7 ist ein erster Sensor 12 zur Detektion der Drehposition der Nabe 11 und damit der Hubposition des Fadenführers 6 zugeordnet. Das Signal des Sensors, für dessen detaillierte Beschreibung auf die europäische Patentanmeldung Nr. 96 117 256.6 verwiesen wird, wird einer Steuerung 13 zugeführt, die überprüft, ob sich der Fadenführer 6 zu einem bestimmten Zeitpunkt an seiner Sollposition befindet. Bei Abweichungen zwischen Ist- und Sollwert gibt die Steuerung 13 an den Motor 7 ein entsprechendes Regelsignal ab.

Im Bereich der Bewegungsumkehrpunkte des Fadenführers 6 sind Energiespeicher zur Beeinflussung der Verzögerung und Beschleunigung des Fadenführers 6 bei seiner Bewegungsumkehr vorgesehen. Der betreffende Energiespeicher wandelt ab Beginn der Verzögerung die kinetische Energie des Fadenführers 6 in potentielle Energie um, wodurch der Fadenführer verzögert wird. Nach Beendigung der Verzögerung, sobald der Umkehrpunkt erreicht ist, wird die gespeicherte Energie wieder an das bewegte System abgegeben, wodurch der Fadenführer 6 wieder beschleunigt wird. Theoretisch (bei Vernachlässigung der Reibung) wird der Fadenführer 6 wieder auf die ursprüngliche Geschwindigkeit beschleunigt, ohne dass zusätzliche Energie benötigt wird.

Die Energiespeicher sind durch auf einem Träger 14 gelagerte, elastische oder federnde Speicherelemente 15 in der Art von Luftpuffern, Magnetpuffern, federnd gelagerten Pufferplättchen oder anderen geeigneten Speichermedien gebildet. Der Fadenführer 6 weist im Niveau der Speicherelemente 15 einen rippenartigen Vorsprung 16 auf, der zum Zeitpunkt des Beginns der Verzögerung auf das Speicherelement 15 trifft und dieses spannt.

In der Beschleunigungsphase nach dem Umkehrpunkt entspannt sich das Speicherelement 15 und beschleunigt den Fadenführer 6. Für eine detailliertere Beschreibung der Energiespeicher wird auf die europäische Patentanmeldung Nr. 96 117 256.6 verwiesen.

Wie Fig. 2 zu entnehmen ist, weist der Träger 14 der Speicherelemente 15 etwa die Form eines Y auf. Der Träger 14, der auf der Motorachse 8 frei drehbar gelagert ist, trägt an den Enden seiner beiden nach oben ragenden Schenkel die Speicherelemente 15 und ist an seinem nach unten ragenden Schenkel über ein in Richtung des Doppelpfeils P antreibbares Verbindungselement 17 mit einem Antrieb 18 verbunden. Die Grösse des Hubs der oszillierenden Bewegung des Trägers 14 kann am Antrieb 17 oder am Verbindungselement 18 mit geeigneten Mitteln eingestellt werden. Wenn diese Einstellmittel elektrisch oder magnetisch und reproduzierbar sind, kann dem Wickelprozess ein beliebiges Hubprofil vorgegeben werden.

Der Hub der Schwenkbewegung des Trägers 14 definiert den Hub des Fadenführers 6, wobei der Träger 14 eine wesentlich kürzere Hubbewegung ausführt und daher auch wesentlich langsamer angetrieben ist als der Fadenführer 6. Man könnte sich vorstellen, dass der Abstand zwischen den Speicherelementen 15 gerade so gross gewählt ist, dass der Vorsprung 16 des Fadenführers 6 exakt im Zeitpunkt des Beginns der Verzögerung auf die Speicherelemente 15 trifft. In diesem Fall könnte der Träger 14 in Ruhestellung verharren.

Wenn nun der Hub des Fadenführers 6 länger werden soll, dann müsste der Träger 14 mit dem genannten Abstand zwischen den Speicherelementen 15 jeweils etwas nach aussen geschwenkt, und wenn der Hub des Fadenführers 6 kürzer werden soll, dann müsste dieser Träger 14 jeweils etwas nach innen geschwenkt werden. Der Hub des Trägers 14 beträgt also immer die im Vergleich zum Hub des Fadenführers 6 sehr kurze Strecke von der in Fig. 2 eingezeichneten Ruhestellung bis in die Endlage beim Anschlag der Rippe 16.

Zur Überwachung und Steuerung der Bewegung des Trägers 14 ist ein zweiter Sensor 19 vorgesehen, der so wie der erste Sensor 12 mit der Steuerung 13 verbunden ist. Der zweite Sensor 19 ist ein zur Abtastung der Rotationsbewegung des Trägers 14 geeigneter Positionssensor, beispielsweise ein fotoelektrischer Sensor. Der Träger 14 ist zu diesem Zweck mit geeigneten optisch abtastbaren Markierungen versehen.

Das Sensorsignal wird der Steuerung 13 zugeführt, die überprüft, ob sich der Träger 14 zu einem bestimmten Zeitpunkt an seiner Ist-Position befindet. Bei einer Abweichung zwischen Ist- und Sollwert gibt die Steuerung 13 an den Antriebsmotor 18 ein entsprechendes Signal ab, so dass der Antrieb des Trägers 14 verzögert oder beschleunigt wird. Da die Signale sowohl des ersten als auch des zweiten Sensors 12 bzw. 19 der Steuerung 13 zugeführt sind, erfolgt in dieser zusätzlich noch ein Quervergleich zwischen den beiden Sensorsignalen. Dadurch können eventuelle Abweichungen im Synchronismus zwischen den Schwenkbewegungen des Fadenführers 6 einerseits und des Trägers 14 der Speicherelemente 15 andererseits festgestellt und die beiden Motoren 7 und 18 können entsprechend nachgeregelt werden.

Die beschriebene Fadenverlegung 4 hat den Vorteil, dass eine hohe Wickelgeschwindigkeit und eine hohe Beschleunigung des Fadenführers 6 in den Umkehrpunkten erreicht wird. Durch die in der Verzögerungs- und in der Beschleunigungsphase im Bereich der Umkehrpunkte wirkenden Energiespeicher 15 kann bei der Verzögerung relativ viel Energie zurückgewonnen und anschliessend für die Beschleunigung eingesetzt werden, woraus ein geringer Energieverbrauch resultiert.

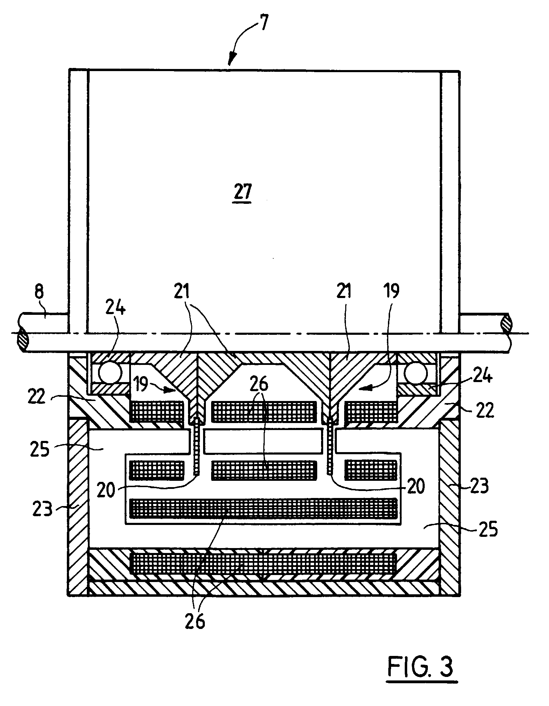

Fig. 3 zeigt eine Darstellung des Schrittmotors 7, in der unteren Hälfte der Figur in einem stark vereinfachten Axialschnitt. Darstellungsgemäss enthält der Motor 7 mindestens zwei Rotoranordnungen 19 mit je einem auf der Motorachse 8 fixierten Drehteil 20. Die Drehteile 20 weisen die Form von auf der Motorachse 8 mittels Halteteilen 21 befestigten ringförmigen Scheiben auf. Die Halteteile 21 sind im Presssitz auf der Motorachse 8 fixiert und tragen an ihrem Umfang einen dünnen Permanentmagneten, der das Drehteil 20 bildet. Dieses ist in axialer Richtung magnetisiert und weist an jeder Stelle der Scheibe eine Mehrzahl magnetischer Pole abwechselnder Polarität auf, die regelmässig entlang eines ringförmigen Bereichs angeordnet sind.

Zwei Statorhalterungen 22 aus nichtmagnetischem Material, beispielsweise aus Kunststoff, sind einander gegenüberliegend vorgesehen und werden durch ringförmige Flansche 23 und Schrauben (nicht dargestellt) zusammengehalten. Die Statorhalterungen 22, in denen die Motorwelle 8 ist mittels Lagern 24 drehbar gelagert ist, tragen mehrere magnetische Elementarkreise 25 und elektrische Spulen 26. Bezüglich eines möglichen Aufbaus und einer möglichen Anordnung der Elementarkreise 25 und der Spulen 26 wird beispielsweise auf das CH-Patent Nr. 653 189 verwiesen. Darstellungsgemäss sind Aufbau und Anordnung der Elementarkreise 25 und der Spulen 26 so gewählt, dass bei jedem Elementarkreis 25 zwei Eisenkerne von Spulen 26 umwickelt sind.

Die in Fig. 3 dargestellte Ausbildung der Rotoranordnungen 19 und deren Anordnung in einem gemeinsamen Gehäuse 27 sowie die Ausbildung und Anordnung der Elementarkreise 25 und der Spulen 26 ermöglicht eine ausgezeichnete Kopplung zwischen den Spulen und den zugehörigen Elementarkreisen und eine minimale Länge der magnetischen Flusslinien im Inneren der Kreise.

Die Anordnung von zwei Rotoranordnungen auf einer gemeinsamen Motorachse hat den Vorteil, dass sich die Motorleistung stark erhöht, ohne dass dies mit einer entsprechenden Erhöhung des Trägheitsmoments des Motors verbunden wäre. Dadurch lässt sich mit der dargestellten Spulvorrichtung eine wesentlich höhere Wickelgeschwindigkeit als bisher erzielen. Selbstverständlich ist der Schrittmotor nicht auf die dargestellte Tandemanordnung mit zwei Rotoranordnungen beschränkt, sondern es können auch mehr als zwei Rotoranordnungen verwendet werden. Ein weiterer Vorteil der dargestellten Tandemanordnung liegt darin, dass die Flusslinien im Eisen stark verkürzt werden, was zu einer Erhöhung des Drehmoments des Motors und damit zu einer nochmaligen Steigerung der Wickelgeschwindigkeit führt

Wenn auch die in Fig. 3 dargestellte Tandemanordnung des Schrittmotors in Zusammenhang mit der in der europäischen Patentanmeldung Nr. 96 117 256.6 beschriebenen Aufwickelvorrichtung mit einem finger- oder zeigerartigen Fadenführer dargestellt ist, so ist diese Tandemanordnung mit mindestens zwei Rotoranordnungen selbstverständlich nicht auf diese Anwendung beschränkt. Die Tandemanordnung kann vielmehr auch für Antriebsmotoren für andere Aufwickelvorrichtungen, beispielsweise für die in der europäischen Patentanmeldung Nr. 97 115 596.5 beschriebene, oder auch für Applikationen ausserhalb der Textilindustrie verwendet werden. Allgemein gilt, dass überall dort, wo Schrittmotoren mit maximaler Motorleistung bei möglichst geringem Trägheitsmoment eingesetzt werden, eine Tandemanordnung der dargestellten Art verwendet werden kann.

## Patentansprüche

1. Vorrichtung zum Aufwickeln eines Fadens (F) auf eine Spule (3), mit einem Fadenführer (6), welcher von einem Schrittmotor (7) oszillierend antreibbar ist und beim Aufwickeln des Fadens (F) eine Changierbewegung entlang der Spulenachse (S) ausführt, dadurch gekennzeichnet, dass der Schrittmotor (7) mindestens zwei Rotoranordnungen (19) aufweist, von denen jede ein auf der Motorachse (8) befestigtes Drehteil (20) enthält, welchem in einem ortsfesten Gehäuse (27) angeordnete magnetische Elementarkreise (25) und elektrische Spulen (26) zugeordnet sind.

2. Vorrichtung nach Anspruch 1, dadurch gekennzeichnet, dass die mindestens zwei Rotoranordnungen (19) identisch ausgebildet sind.

3. Vorrichtung nach Anspruch 1 oder 2, dadurch gekennzeichnet, dass die mindestens zwei Rotoranordnungen in einem gemeinsamen Gehäuse (27) angeordnet sind.

4. Vorrichtung nach einem der Ansprüche 1 bis 3, dadurch gekennzeichnet, dass die magnetischen Elementarkreise (25) und die elektrischen Spulen (26) so ausgebildet und angeordnet sind, dass bei jedem Elementarkreis (25) zwei Eisenkerne von Spulen (26) umwickelt sind.

5. Vorrichtung nach einem der Ansprüche 1 bis 4, dadurch gekennzeichnet, dass die Drehteile (20), die magetischen Elementarkreise (25) und die elektrischen Spulen (26) so angeordnet und ausgebildet sind, dass in jedem Drehteil (20) eine Kompensation von Harmonischen durch winkelmässige Verschiebung der beiden Statorhälften erfolgt, ohne dass ein merklicher Flussverlust auftritt.
